# EUROPEAN PATENT SPECIFICATION

(11) **EP 4 266 283 B1**
(45) Date of publication and mention of the grant of the patent: **06.05.2026**
(21) Application number: 21910267.0
(22) Date of filing: 06.12.2021
(51) Int. Cl.: G08G 1/04, G08G 1/09

(54) **ROAD OBSERVATION DEVICE AND ROAD OBSERVATION METHOD**
STRASSENBEOBACHTUNGSVORRICHTUNG UND STRASSENBEOBACHTUNGSVERFAHREN
DISPOSITIF D'OBSERVATION DE ROUTE ET PROCÉDÉ D'OBSERVATION DE ROUTE

(30) Priority: 21.12.2020 JP 2020211815
(43) Date of publication of application: 25.10.2023
(73) Proprietor: Kyocera Corporation, Kyoto-shi Kyoto 612-8501 (JP)
(72) Inventor: NEMOTO Masayuki, Kyoto-shi, Kyoto 612-8501 (JP)
(74) Representative: Viering, Jentschura & Partner mbB Patent- und Rechtsanwälte
(86) International application number: PCT/JP2021/044761
(87) International publication number: WO 2022/138117

(56) References cited:
- WO-A1-2020/021009
- JP-A- 2004 178 239
- JP-A- 2004 317 309
- JP-A- 2012 208 751
- HAUTIERE N ET AL: "Detection of visibility conditions through use of onboard cameras", INTELLIGENT VEHICLES SYMPOSIUM, 2005. PROCEEDINGS. IEEE LAS VEGAS, NV, USA JUNE 6-8, 2005, PISCATAWAY, NJ, USA,IEEE, PISCATAWAY, NJ, USA, 6 June 2005 (2005-06-06), pages 193 - 198, XP010833966, ISBN: 978-0-7803-8961-8, DOI: 10.1109/IVS.2005.1505101

## Description

### CROSS-REFERENCE TO RELATED APPLICATIONS

The present application claims priority to Japanese Patent Application No. 2020-211815 (filed December 21, 2020).

### TECHNICAL FIELD

The present disclosure relates to a road observation apparatus and a method for observing a road.

### BACKGROUND OF INVENTION

During these years, safe driving assistance systems where a road observation apparatus is provided on a side of a road, vehicles, pedestrians, and the like are detected, and vehicles in close proximity to each other are notified of danger are being developed. Patent Literature 1, for example, discloses shape recognition of an object with a roadside apparatus, which is a type of road observation apparatus, and a determination as to a type of object. Patent Literature 2 discloses a method for updating a map of a surrounding area, wherein a vehicle attempts, when travelling along a carriageway, to detect, by means of sensors, a landmark recorded in the map of the surrounding area. Should the vehicle then be unable to detect the landmark using its sensors, the vehicle prepares a proposal for deletion which is sent to an external central computer, in which the proposal for deletion is examined and, if the proposal for deletion is verified, the landmark is deleted from the map of the surrounding area. Information regarding a visibility range for the landmark is entered in the map of the surrounding area specifying at what range the landmark is visible from the road. Non-Patent Literature 1 discloses detection of visibility conditions through use of onboard cameras, wherein measurement of a mobilized visibility distance is performed by combining a depth map of the environment ahead of a vehicle and contrasts of obstacles occluding part of the road above a certain threshold in an image.

### CITATION LIST

### PATENT LITERATURE

Patent Literature 1: Japanese Unexamined Patent Application Publication No. 2007-272598; Patent Literature 2: WO 2020/021009 A1

### NON-PATENT LITERATURE

Non-Patent Literature 1: HAUTIERE N ET AL: "Detection of visibility conditions through use of onboard cameras", INTELLIGENT VEHICLES SYMPOSIUM, 2005. PROCEEDINGS. IEEE LAS VEGAS, NV, USA, JUNE 6-8, 2005, PISCATAWAY, NJ, USA, IEEE, PISCATAWAY, NJ, USA 6 June 2005, pages 193-198, xp010833966, DOI: 10.1109/IVS.2005.1505101, ISBN: 978-0-7803-8961-8

### SUMMARY

The present invention provides a road observation apparatus according to claim 1, and a method for observing a road according to claim 8.

Further embodiments are described in the dependent claims.

### BRIEF DESCRIPTION OF THE DRAWINGS

FIG. 1 is a diagram illustrating an example of configuration of a communication system including a road observation apparatus according to an embodiment.
FIG. 2 is an example of a functional block diagram of the road observation apparatus according to the embodiment.
FIG. 3 is a diagram illustrating an example of configuration of the road observation apparatus according to the embodiment.
FIG. 4 is a diagram illustrating an example of installation of the road observation apparatus according to the embodiment.
FIG. 5 is a diagram illustrating a visible range.
FIG. 6 is another diagram illustrating the visible range.
FIG. 7 is a diagram illustrating when to set the visible range.
FIG. 8 is a flowchart illustrating an example of a method for observing a road according to the embodiment.

### DESCRIPTION OF EMBODIMENTS

### (Communication System)

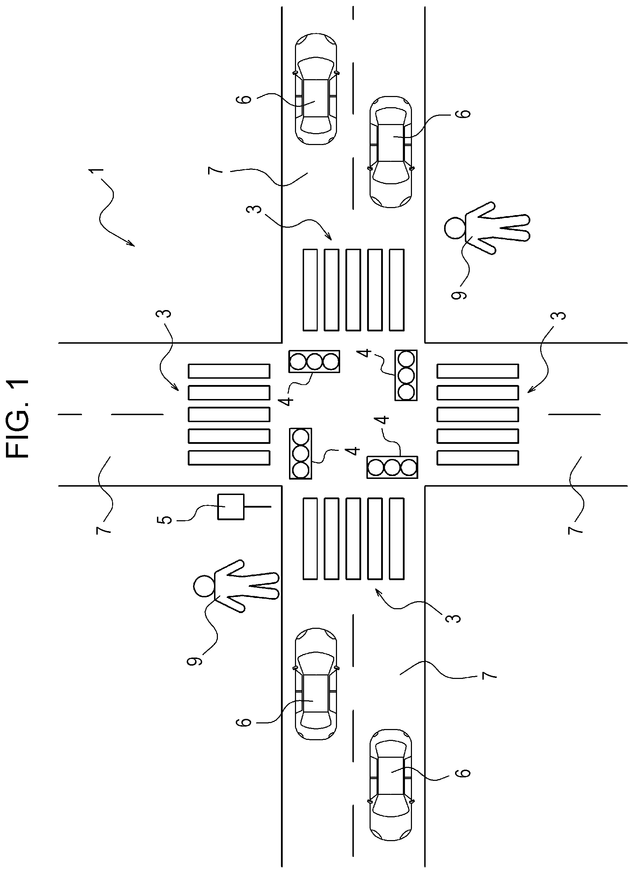

FIG. 1 illustrates an example of configuration of a communication system 1 including a road observation apparatus 5 according to an embodiment. The communication system 1 is, for example, a safe driving assistance communication system of an intelligent transport system (ITS). The safe driving assistance communication system is also called a safe driving assistance system or a safe driving assistance wireless system.

The road observation apparatus 5 is an apparatus that observes vehicles 6, objects, and humans on roads, such as a roadside apparatus or a surveillance camera apparatus. In the present embodiment, the road observation apparatus 5 is a roadside apparatus provided near an intersection between a plurality of roads 7 (roadways). The road observation apparatus 5 may be provided on a side of a road other than an intersection, instead. Details of the road observation apparatus 5 will be described later.

In the communication system 1, the road observation apparatus 5 and vehicles 6 running on the roads 7, such as automobiles, can wirelessly communicate with each other. The plurality of vehicles 6 may be wirelessly capable of communicating with one another. In the communication system 1, electronic devices carried by pedestrians 9 may also be capable of performing wireless communication. The electronic devices are, for example, mobile terminal devices such as smartphones.

The road observation apparatus 5 is capable of transmitting, to the vehicles 6, safe driving assistance information for assisting drivers of the vehicles 6 in driving safely. The safe driving assistance information may include, for example, information regarding lighting of signals 4, information regarding traffic rules, and road linear information indicating, for example, a shape of the intersection (shapes of the roads 7) at which the road observation apparatus 5 is provided. The road observation apparatus 5 also detects nearby vehicles 6 and pedestrians 9. The road observation apparatus 5 can detect, for example, pedestrians 9 walking across pedestrian crossings 3. The road observation apparatus 5 can detect vehicles 6 approaching the intersection. The road observation apparatus 5 is capable of transmitting, to the vehicles 6, information regarding detected vehicles 6 and pedestrians 9 while including the information in the safe driving assistance information. The road observation apparatus 5 is also capable of including information transmitted from one of the vehicles 6 in the safe driving assistance information and transmitting the safe driving assistance information to the other vehicles 6. As described above, the road observation apparatus 5 may be capable of transmitting these pieces of information to the electronic devices carried by the pedestrians 9.

The vehicles 6 may, for example, regularly transmit vehicle information to the road observation apparatus 5 and other apparatuses. The vehicle information can include, for example, information regarding positions, speeds, and direction indicators of the vehicles 6. The vehicles 6 can receive various pieces of information transmitted from the road observation apparatus 5 and other apparatuses depending on electronic devices provided therefor. The electronic devices provided for the vehicles 6 may be, for example, automotive navigation systems. The electronic devices provided for the vehicles 6 can assist the drivers in driving safely by issuing notifications such as warnings to the drivers on the basis of information transmitted from the road observation apparatus 5. The notifications to the drivers may indicate, for example, approach of another vehicle 6 from the front when a vehicle 6 is turning at an intersection or presence of a pedestrian 9 on a pedestrian crossing 3 at an end of a turn.

In the present embodiment, the road observation apparatus 5 is capable of transmitting safe driving assistance information based on a visible range to the vehicles 6. The visible range is a range within which the road observation apparatus 5 can recognize (identify) objects in images captured by a camera thereof. The visible range may be close to a range within which general drivers can recognize objects. Objects may be recognized by determining presence or absence of objects. Alternatively, objects may be recognized by determining types of objects. The visible range varies depending on an environment including meteorological phenomena and becomes short, for example, due to a fog. When the visible range obtained on the basis of a captured image is 25 m, for example, the road observation apparatus 5 may transmit, to the vehicles 6 as safe driving assistance information, information for prompting the drivers to decelerate to a speed at which the vehicles 6 can stop within 25 m when brakes are applied.

The communication system 1 thus assists the drivers of the vehicles 6 in driving safely. The vehicles 6 are not limited to automobiles. The vehicles 6 can include, for example, motorcycles, buses, streetcars, and bicycles.

### (Functional Block Diagram of Road Observation Apparatus)

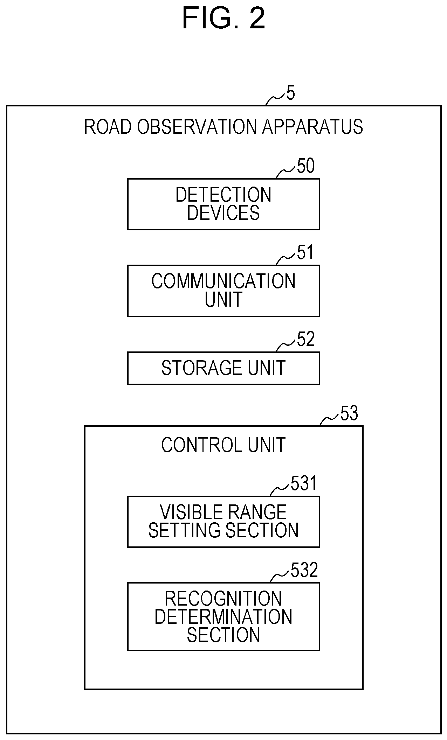

FIG. 2 is a functional block diagram of the road observation apparatus 5 according to the embodiment. The road observation apparatus 5 includes detection devices 50, a communication unit 51, a storage unit 52, and a control unit 53. A plurality of detection devices 50 may be included. The plurality of detection devices 50 may be capable of operating independently of one another.

The detection devices 50 detect the vehicles 6, the pedestrians 9, and the like. The detection devices 50 include sensors. The detection devices 50 may be, for example, visible light cameras including image sensors. The detection devices 50 may be infrared cameras including infrared sensors. In the present embodiment, the detection devices 50 include at least a visible light camera and obtain captured images by capturing images of imaging targets including markers M, which will be described later.

The sensors included in the detection devices 50 are not limited to image sensors and infrared sensors. The sensors included in the detection devices 50 can include, for example, 3D laser scanners. The detection devices 50 output detection signals detected by the sensors and the captured images, for example, to the control unit 53.

The communication unit 51 wirelessly communicates with the vehicles 6 under control of the control unit 53. The communication unit 51 may include a communication circuit and an antenna. The antenna may be, for example, an omnidirectional antenna. The communication unit 51 may perform wireless communication using, for example, a 700 MHz band assigned to the ITS. Alternatively, the communication unit 51 may perform wireless communication, for example, using a wireless LAN (local area network).

The communication unit 51 performs various types of processing, such as amplification, on signals received by the antenna and outputs the reception signals subjected to the various types of processing to the control unit 53. The control unit 53 performs various types of processing on the input reception signals to obtain information included in the reception signals. The control unit 53 outputs transmission signals including information to the communication unit 51. The communication unit 51 performs various types of processing such as amplification on the input transmission signals and wirelessly transmits the transmission signals subjected to the various types of processing from the antenna.

The storage unit 52 may have a function as a memory that stores various pieces of information. The storage unit 52 may store, for example, programs to be executed by the control unit 53, results of processing performed by the control unit 53, and the like. The storage unit 52 may function as a work memory of the control unit 53. The storage unit 52 may be achieved by semiconductor memories such as a ROM and a RAM, for example, but is not limited to these and may be any storage devices. The storage unit 52 may include, for example, a small hard disk drive and an SSD (solid-state drive).

In the present embodiment, the storage unit 52 stores data relating to visible range setting and recognition correctness determination performed by the control unit 53. The storage unit 52 may store a visible range set or updated (reset) by the control unit 53. The storage unit 52 may also store coordinate-distance correspondence data indicating correspondences between positions (coordinates) of imaging targets in captured images and distances to the imaging targets. The storage unit 52 may also store a program for causing the control unit 53 to perform the visible range setting and the recognition correctness determination. In other words, the storage unit 52 may store a program for causing the control unit 53 to function as a visible range setting section 531 and a recognition determination section 532, which will be described later.

The control unit 53 manages overall operation of the road observation apparatus 5 by controlling the other components of the road observation apparatus 5. The control unit 53 may include one or more processors. The processors may load programs from accessible memories and achieve various functions of the road observation apparatus 5. The processors may include at least a general-purpose processor that reads a certain program and that achieves a certain function or a dedicated processor specialized in a certain type of processing. The dedicated processor may include an application-specific integrated circuit (ASIC). The processors may include a programmable logic device (PLD). The PLD may include an FPGA (field-programmable gate array). The control unit 53 may include at least an SoC (system-on-a-chip) or a SiP (system-in-a-package), where one or more processors operate together.

In the present embodiment, the control unit 53 includes the visible range setting section 531 and the recognition determination section 532. The visible range setting section 531 performs the visible range setting, where the visible range is set (determined), at times that will be described later, on the basis of recognition of the markers M in a captured image. The recognition determination section 532 performs the recognition correctness determination, where a distance to an imaging target, such as a vehicle 6 or a pedestrian 9, recognized in a captured image and the visible range are compared with each other and whether the correction of the imaging target is correct is determined. Details of the visible range setting and the recognition correctness determination will be described later. The control unit 53 is also capable of performing processing for transmitting information regarding the recognized vehicle 6 or pedestrian 9 to the vehicles 6 while including the information in safe driving assistance information.

### (Configuration of Road Observation Apparatus)

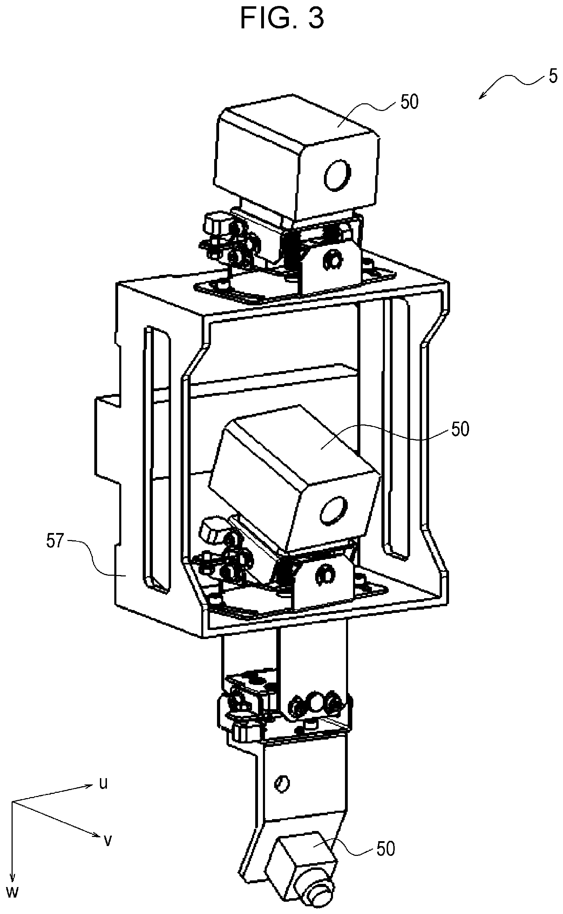

FIG. 3 is a diagram illustrating an example of the configuration of the road observation apparatus 5 according to the present embodiment. As illustrated in FIG. 3, the road observation apparatus 5 may be provided as a road observation unit where the plurality of detection devices 50 included therein are connected to a connector 57 to define a relative positional relationship.

The connector 57 is a member for connecting the detection devices 50. In the present embodiment, the connector 57 is a metal frame member. A material and a shape of the connector 57, however, are not limited. As illustrated in FIG. 3, a Cartesian coordinate system may be defined for the road observation apparatus 5, which is the road observation unit. A u-axis direction, a v-axis direction, and a w-axis direction, for example, correspond to directions in which sides of the connector 57 cross at right angles at a vertex of the connector 57, respectively. As illustrated in FIG. 3, the plurality of detection devices 50 is aligned in the w-axis direction in the road observation apparatus 5 according to the present embodiment.

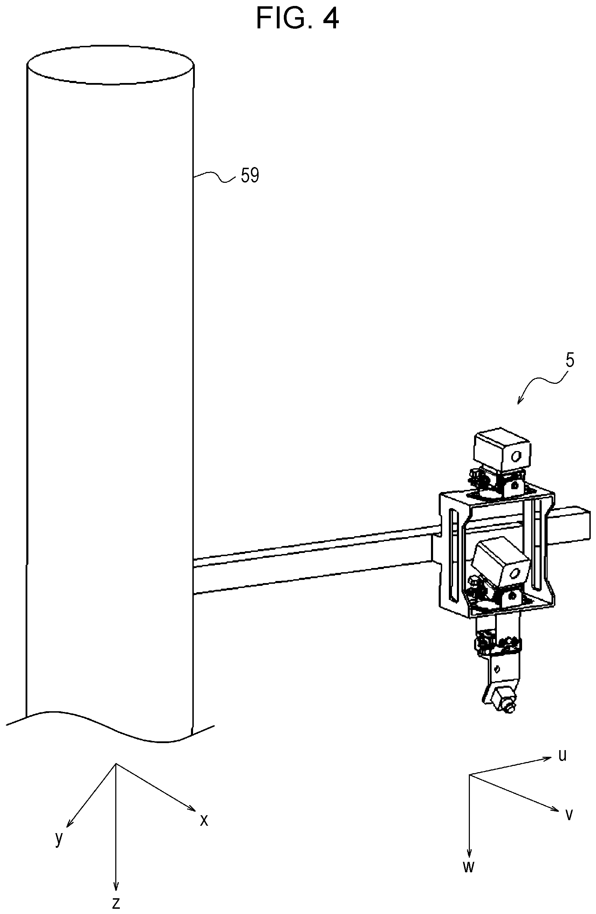

FIG. 4 illustrates an example of installation of the road observation apparatus 5. The road observation apparatus 5 is installed, for example, on a pole 59 near an intersection between roads 7 to be observed. The connector 57 may be fixed on the pole 59, and orientations of the plurality of detection devices 50 may be adjusted in relation to the connector 57. When the road observation apparatus 5 is installed in such a way as to observe the roads from above, the w-axis direction is a vertical direction. In FIG. 4, a z-axis direction is the vertical direction, and an x-axis and a y-axis are horizontal directions perpendicular to a z-axis.

The detection devices 50 may be mounted on the connector 57 via, for example, a screw, fitting, or the like and the orientations thereof may be adjusted. When the connector 57 is fixed on the pole 59, the detection devices 50 are adjusted in such a way as to be able to observe the roads from above at appropriate angles.

### (Visible Range Setting and Recognition Correctness Determination)

As described above, the road observation apparatus 5 can recognize imaging targets (the vehicles 6, the pedestrians 9, etc.) in images captured by the detection devices 50, generate safe driving assistance information on the basis of types, motions, distances, and the like of the recognized imaging targets, and provide the safe driving assistance information. The detection devices 50 may recognize imaging targets through image processing such as binarization or contour detection. The recognition of imaging targets may include recognition of presence of imaging targets and recognition of types of imaging targets. When a recognized imaging target is beyond the visible range of the road observation apparatus 5, the recognition might not be correct. In order to provide reliable safe driving assistance information, therefore, the road observation apparatus 5 may determine that recognition of a distant imaging target beyond the visible range is incorrect. As described above, on the other hand, the visible range can vary depending on the environment including meteorological phenomena such as fogs, rain, and reflection of sunlight. If a visible range set with poor visibility, for example, continues to be used, therefore, the road observation apparatus 5 might undesirably determine that correct recognition performed after visibility is restored is incorrect. The visible range, therefore, needs to be reset at appropriate times.

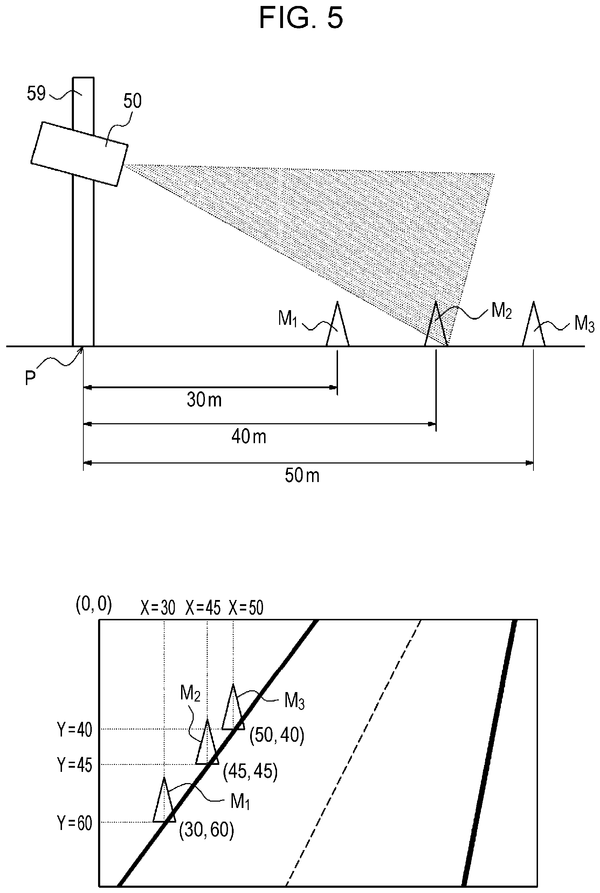

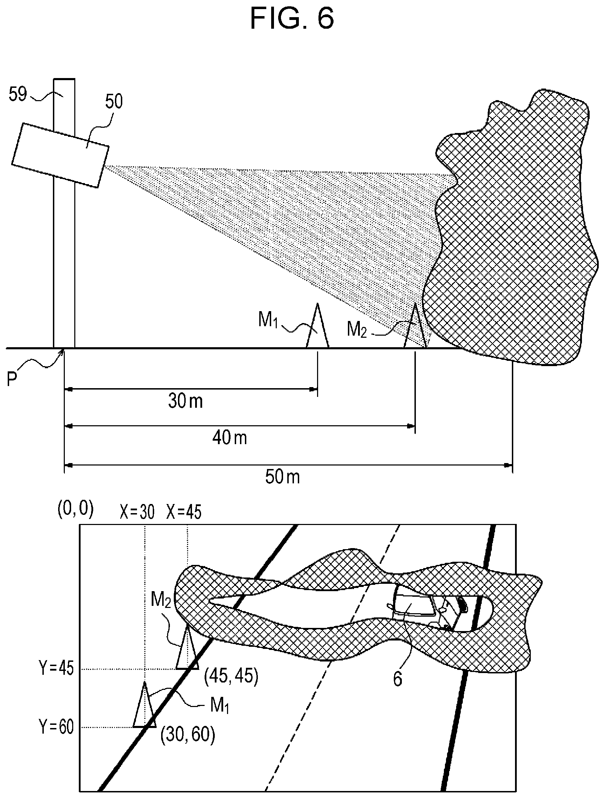

FIGs. 5 and 6 are diagrams illustrating the visible range. FIG. 5 illustrates how one of the detection devices 50 of the road observation apparatus 5 captures an image of markers M at certain distances from an observation position P and the captured image. The observation position P is a position of the detection device 50 at a time when the road observation apparatus 5 installed on the pole 59 is projected onto ground. In other words, the observation position P is a position at which a vertical virtual line from the detection device 50 of the road observation apparatus 5 and the ground intersect each other. The road observation apparatus 5 is capable of associating coordinates in a captured image and distances with each other using the markers M. The markers M are also called signs or indicators. As the markers M, for example, objects that hardly move, such as buildings, installations indicating bus stops or the like, or white lines drawn on the roads 7. The markers M may include a plurality of objects different distances away from the observation position P. In the example illustrated in FIGs. 5 and 6, the markers M include a marker M₁ 30 m ahead of the observation position P, a marker M₂ 40 m ahead of the observation position P, and a marker M₃ 50 m ahead of the observation position P. The road observation apparatus 5 may store, in the storage unit 52, an image including the markers M captured by the detection device 50 in a desirable environment where the farthest marker M can be recognized. The storage unit 52 may store information regarding the distance between the observation position P and each of the markers M. The storage unit 52 may store information regarding a type of each of the markers M.

In the captured image illustrated in FIG. 5, the marker M₃ is located at coordinates (50, 40), which are associated with a position 50 m ahead of the observation position P. The marker M₂ is located at coordinates (45, 45), which are associated with a position 40 m ahead of the observation position P. The marker M₁ is located at coordinates (30, 60), which are associated with a position 30 m ahead of the observation position P. Coordinates of the captured image are defined with a horizontal direction represented by an X-axis, a vertical direction represented by a Y-axis, and coordinates of an upper-left corner determined as (0, 0).

The visible range setting section 531 sets the visible range, which is a range within which an imaging target can be recognized, on the basis of whether the markers M can be recognized. When a plurality of markers M are available, the visible range setting section 531 sets a distance to, among a plurality of objects included in the markers M, a recognizable object located farthest from the observation position P as the visible range. The visible range setting section 531 may determine that the markers M have been recognized when contours of the markers M are detected, for example, as a result of image processing, such as edge extraction, performed on a captured image. Alternatively, the visible range setting section 531 may determine, as a result of comparison between images of the markers M included in the captured image and images of the markers M captured in a desirable environment, that the markers M have been recognized. Alternatively, the visible range setting section 531 may determine, if types of markers M can be correctly recognized, that the markers M have been recognized.

In the example illustrated in FIG. 5, the visible range setting section 531 recognizes all of the marker M₁, the marker M₂, and the marker M₃. At this time, the visible range setting section 531 sets 50 m, which is the distance to the farthest marker M₃, as the visible range. If there is another marker M farther than the marker M₃ and the visible range setting section 531 recognizes the other marker M, a distance corresponding to the other marker M is set as the visible range.

FIG. 6 illustrates how the detection device 50, which is the same as in FIG. 5, of the road observation apparatus 5 captures an image of the markers M and the captured image. In the example illustrated in FIG. 6, the marker M₃ cannot be distinguished from a background and other objects due to a thick fog. In this situation, the visible range setting section 531 sets 40 m, which is the distance to the farthest marker M₂ recognized, as the visible range. After the visible range is set at 40 m, the road observation apparatus 5 might recognize an imaging target (distant imaging target) located at a position farther than 40 m from the observation position P. The term "distant" is used herein to indicate a distance beyond the visible range. A distant imaging target, therefore, need not actually be located distant, and even when an imaging target is located 1 m away, the imaging target is referred to as being located "distant" insofar as the visible range is exceeded. In the example illustrated in FIG. 6, a distant imaging target is a vehicle 6 45 m ahead of the observation position P. If a state of the fog does not change, recognition of the vehicle 6 is appropriately determined to be incorrect. If the fog clears, for example, and the visible range is restored to 50 m, however, the recognition of the vehicle 6 45 m ahead is correct.

In the present embodiment, when the recognition determination section 532 recognizes a distant imaging target beyond a set visible range, the recognition determination section 532 causes the visible range setting section 531 to reset the visible range. If the reset visible range does not exceed a position of the distant imaging target, the recognition determination section 532 determines that the recognition of the distant imaging target is incorrect. If the reset visible range exceeds the position of the distant imaging target, the recognition determination section 532 determines that the recognition of the distant imaging target is correct. After a distant imaging target is recognized at a position beyond a visible range, the recognition determination section 532 thus determines, using a reset visible range appropriate for a current condition, whether the recognition of the distant imaging target is correct. The road observation apparatus 5, therefore, can correctly recognize the imaging target. As in the recognition of the markers M performed by the visible range setting section 531, the recognition determination section 532 may determine that an imaging target has been recognized when a contour of the imaging target has been detected as a result of image processing, such as edge extraction, performed on a captured image. Alternatively, the recognition determination section 532 may determine that an imaging target has been recognized when a type of imaging target has been recognized.

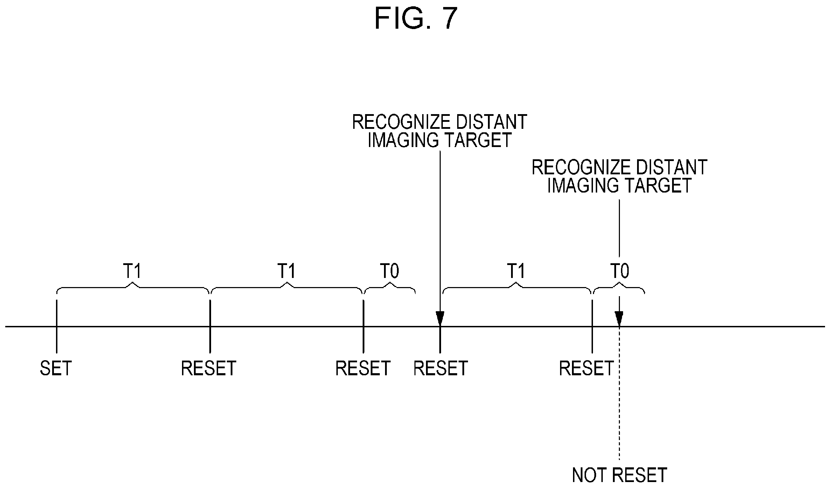

Even if a distant imaging target is not recognized, the recognition determination section 532 may initiate the resetting of the visible range when regular update time T1 (refer to FIG. 7) has elapsed, in order to keep the visible range appropriate for a current condition. When the visible range is reset after the regular update time T1 elapses, the visible range can be kept appropriate for a current operation environment, for example, even with a road observation apparatus 5 that observes roads 7 with little traffic. The regular update time T1 is not particularly limited, but an initial value thereof may be set at, for example, 5 minutes.

If the visible range does not change after regular update, intervals of the update may be increased. If a distant imaging target, that is, an imaging target at a position beyond a set visible range, is not recognized, the recognition determination section 532 may increase the regular update time T1. When the regular update time T1 varies like this, the recognition determination section 532 may reset the regular update time T1 to the initial value after a distant imaging target is recognized.

When the visible range is frequently updated, a processing load of the road observation apparatus 5 increases. The recognition determination section 532, therefore, need not initiate the resetting of the visible range even after a distant imaging target is recognized, until retention time T0 (refer to FIG. 7) has elapsed since the visible range was set. In many cases, the environment including meteorological phenomena does not change very frequently. The retention time T0 is shorter than the regular update time T1.

FIG. 7 is a diagram illustrating when to set the visible range and a summary of the above description. As illustrated in FIG. 7, even if a distant imaging target is not recognized, the recognition determination section 532 initiates the resetting of the visible range when the regular update time T1 has elapsed since the visible range was set. The recognition determination section 532 initiates the resetting of the visible range when the retention time T0 has elapsed since the visible range was set and then a distant imaging target is recognized. If a distant imaging target is recognized before the retention time T0 has elapsed since the visible range was set, however, the recognition determination section 532 does not initiate the resetting of the visible range.

### (Method for Observing Road)

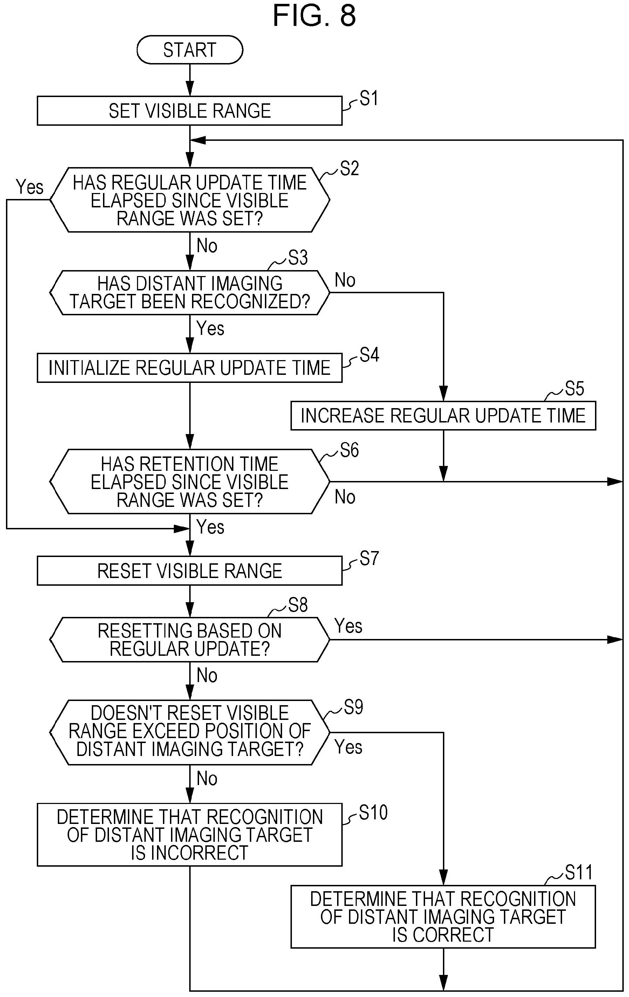

FIG. 8 is a flowchart illustrating a method for observing a road according to another embodiment. The road observation apparatus 5 observes, in accordance with the flowchart of FIG. 8, vehicles 6, objects, and humans on roads while setting a visible range.

The road observation apparatus 5 sets a visible range on the basis of a first captured image (step S1).

When the regular update time T1 has elapsed since the visible range was set (Yes in step S2), the road observation apparatus 5 proceeds to processing in step S7. The regular update time T1 is set at the initial value (e.g., 5 minutes) at a beginning.

When the regular update time T1 has not elapsed since the visible range was set (No in step S2), the road observation apparatus 5 proceeds to processing in step S3.

If a distant imaging target is recognized at a position beyond the set visible range (Yes in step S3), the road observation apparatus 5 initializes the regular update time T1 (step S4). That is, the regular update time T1 is set at the initial value.

If a distant imaging target is not recognized (No in step S3), the road observation apparatus 5 increases the regular update time T1 (step S5). For example, the road observation apparatus 5 may set time 5 minutes longer than the regular update time T1. After increasing the regular update time T1, the road observation apparatus 5 returns to the processing in step S2.

If the retention time T0 has elapsed since the visible range was set after the processing in step S4 (Yes in step S6), the road observation apparatus 5 resets the visible range (step S7).

If the retention time T0 has not elapsed since the visible range was set after the processing in step S4 (No in step S6), the road observation apparatus 5 returns to the processing in step S2.

If the processing in step S7 is the resetting based on the regular update (Yes in step S8), the road observation apparatus 5 returns to the processing in step S2.

If the processing in step S7 is not the regular update and is the resetting as a result of recognition of a distant imaging target (No in step S8), the road observation apparatus 5 proceeds to step S9.

If the reset visible range does not exceed a position of the distant imaging target (No in step S9), the road observation apparatus 5 determines that the recognition of the distant imaging target is incorrect (step S10). That is, if the distant imaging target exceeds the visible range even after the resetting, the road observation apparatus 5 determines that the recognition of the distant imaging target is incorrect. The road observation apparatus 5 then returns to the processing in step S2.

If the reset visible range exceeds the position of the distant imaging target (Yes in step S9), the road observation apparatus 5 determines that the recognition of the distant imaging target is correct (step S11). That is, if the visible range includes the position of the distant imaging target as a result of the resetting, the road observation apparatus 5 determines that the recognition of the distant imaging target is correct. The road observation apparatus 5 then returns to the processing in step S2.

As described above, in the present embodiment, the road observation apparatus 5 and the method for observing a road can correctly recognize an imaging target with the above configurations and steps. The road observation apparatus 5 is also capable of transmitting, on the basis of a reset visible range appropriate for a current condition, useful safe driving assistance information, such as a speed at which the vehicles 6 can be stopped, to the vehicles 6.

### REFERENCE SIGNS

- 1: communication system
- 3: pedestrian crossing
- 4: signal
- 5: road observation apparatus
- 6: vehicle
- 7: road
- 9: pedestrian
- 50: detection device
- 51: communication unit
- 52: storage unit
- 53: control unit
- 57: connector
- 59: pole
- 531: visible range setting section
- 532: recognition determination section

## Claims

1. A road observation apparatus (5) comprising:
a visible range setter (531) that sets a visible range, which is a range within which an imaging target (6, 9) is recognisable by said observation apparatus on a basis of whether a marker (M) included in said imaging target is recognisable; and
a recognition determiner (532) that, if a distant imaging target (6, 9), which is the imaging target (6, 9) located at a position beyond the set visible range, is recognised, initiates resetting of the visible range and that, if the reset visible range does not exceed the position of the distant imaging target (6, 9), determines that the recognition of the distant imaging target (6, 9) is incorrect.

2. The road observation apparatus (5) according to claim 1,
wherein the marker (M) includes a plurality of objects different distances away from an observation position (P), and
wherein the visible range setter (531) sets, as the visible range, a distance to, among the plurality of objects included in the marker (M), a recognisable object farthest from the observation position (P).

3. The road observation apparatus (5) according to claim 2, wherein
the recognition determiner (532), when an object of the plurality of objects of the marker (M) beyond the position of the distant imaging target (6, 9) is not recognisable, determines that the recognition of the distant imaging target (6, 9) is incorrect.

4. The road observation apparatus (5) according to any of claims 1 to 3,
wherein, if the reset visible range exceeds the position of the distant imaging target (6, 9), the recognition determiner (532) determines that the recognition of the distant imaging target (6, 9) is correct.

5. The road observation apparatus (5) according to any of claims 1 to 4,
wherein, when regular update time has elapsed since the visible range was set, the recognition determiner (532) initiates the resetting of the visible range.

6. The road observation apparatus (5) according to claim 5,
wherein, if the distant imaging target (6, 9) is not recognised, the recognition determiner (532) increases the regular update time.

7. The road observation apparatus (5) according to claim 5 or 6, wherein, even if the distant imaging target (6, 9) is recognised the recognition determiner (532) does not initiate the resetting of the visible range until retention time, which is shorter than the regular update time, has elapsed since the visible range was set.

8. A method for observing a road, the method comprising:
setting a visible range, which is a range within which an imaging target (6, 9) is recognisable by said imaging apparatus , on a basis of whether a marker (M) included in said imaging target is recognisable (S1);
initiating, if a distant imaging target (6, 9), which is the imaging target (6, 9) located at a position beyond the set visible range, resetting of the visible range (S7); and
determining, if the reset visible range does not exceed the position of the distant imaging target (6, 9), that the recognition of the distant imaging target (6, 9) is incorrect (S10).

## Patentansprüche

1. Straßenbeobachtungsvorrichtung (5), aufweisend:
eine Sichtbereich-Setzvorrichtung (531), die einen Sichtbereich setzt, der ein Bereich ist, innerhalb dessen ein Abbildungsziel (6, 9) durch die Beobachtungsvorrichtung erkennbar ist, auf einer Grundlage dessen, ob eine Markierung (M), die in dem Abbildungsziel enthalten ist, erkennbar ist, und
eine Erkennungsermittlungsvorrichtung (532), die, wenn ein entferntes Abbildungsziel (6, 9), das das Abbildungsziel (6, 9) ist, das an einer Position über den gesetzten Sichtbereich hinaus angeordnet ist, erkannt wird, ein Neusetzen des Sichtbereichs initiiert und die, wenn der neugesetzte Sichtbereich die Position des entfernten Abbildungsziels (6, 9) nicht überschreitet, ermittelt, dass die Erkennung des entfernten Abbildungsziels (6, 9) fehlerhaft ist.

2. Straßenbeobachtungsvorrichtung (5) gemäß Anspruch 1,
wobei die Markierung (M) eine Mehrzahl von Objekten aufweist, die sich in unterschiedlichen Entfernungen von einer Beobachtungsposition (P) befinden, und
wobei die Sichtbereich-Setzvorrichtung (531) als den Sichtbereich eine Entfernung zu einem erkennbaren Objekt unter der Mehrzahl von in der Markierung (M) enthaltenen Objekten setzt, das von der Beobachtungsposition (P) am weitesten entfernt ist.

3. Straßenbeobachtungsvorrichtung (5) gemäß Anspruch 2, wobei
die Erkennungsermittlungsvorrichtung (532), wenn ein Objekt aus der Mehrzahl von Objekten der Markierung (M) über die Position des entfernten Abbildungsziels (6, 9) hinaus nicht erkennbar ist, ermittelt, dass die Erkennung des entfernten Abbildungsziels (6, 9) fehlerhaft ist.

4. Straßenbeobachtungsvorrichtung (5) gemäß irgendeinem der Ansprüche 1 bis 3,
wobei, wenn der neugesetzte Sichtbereich die Position des entfernten Abbildungsziels (6, 9) überschreitet, die Erkennungsermittlungsvorrichtung (532) ermittelt, dass die Erkennung des entfernten Abbildungsziels (6, 9) korrekt ist.

5. Straßenbeobachtungsvorrichtung (5) gemäß irgendeinem der Ansprüche 1 bis 4,
wobei, wenn seit dem Setzen des Sichtbereichs die reguläre Aktualisierungszeit abgelaufen ist, die Erkennungsermittlungsvorrichtung (532) das Neusetzen des Sichtbereichs initiiert.

6. Straßenbeobachtungsvorrichtung (5) gemäß Anspruch 5,
wobei, wenn das entfernte Abbildungsziel (6, 9) nicht erkannt wird, die Erkennungsermittlungsvorrichtung (532) die reguläre Aktualisierungszeit verlängert.

7. Straßenbeobachtungsvorrichtung (5) gemäß Anspruch 5 oder 6, wobei die Erkennungsermittlungsvorrichtung (532) selbst dann, wenn das entfernte Abbildungsziel (6, 9) erkannt wird, das Neusetzen des Sichtbereichs erst dann initiiert, wenn seit dem Setzen des Sichtbereichs eine Haltezeit, die kürzer als die reguläre Aktualisierungszeit ist, verstrichen ist.

8. Verfahren zum Beobachten einer Straße, wobei das Verfahren aufweist:
Setzen eines Sichtbereichs, der ein Bereich ist, innerhalb dessen ein Abbildungsziel (6, 9) durch die Abbildungsvorrichtung erkennbar ist, auf einer Grundlage dessen, ob eine in dem Abbildungsziel enthaltene Markierung (M) erkennbar ist (S1);
Initiieren eines Neusetzens des Sichtbereichs (S7), wenn ein entferntes Abbildungsziel (6, 9), das das Abbildungsziel (6, 9) ist, das an einer Position über den gesetzten Sichtbereichs hinaus angeordnet ist; und
Ermitteln, dass die Erkennung des entfernten Abbildungsziels (6, 9) fehlerhaft ist, wenn der neugesetzte Sichtbereich die Position des entfernten Abbildungsziels (6, 9) nicht überschreitet (S10).

## Revendications

1. Appareil d'observation routière (5), comprenant :
un dispositif de définition de zone visible (531) qui définit une zone visible, qui est une zone dans laquelle une cible d'imagerie (6, 9) est reconnaissable par ledit appareil d'observation en fonction de la question de savoir si un marqueur (M9 inclus dans ladite cible d'imagerie est reconnaissable ; et
un dispositif de détermination de reconnaissance (532) qui, si une cible d'imagerie distante (6, 9), qui est la cible d'imagerie (6, 9) située à une position au-delà de la zone visible définie, est reconnue, déclenche une réinitialisation de la zone visible et qui, si la zone visible réinitialisée ne dépasse pas la position de la cible d'imagerie distante (6, 9), détermine que la reconnaissance de la cible d'imagerie distante (6, 9) est incorrecte.

2. Appareil d'observation routière (5) selon la revendication 1,
dans lequel le marqueur (M) comprend une pluralité d'objets situés à des distances différentes d'une position d'observation (P), et
dans lequel le dispositif de définition de zone visible (531) définit, comme zone visible, une distance par rapport à, parmi la pluralité d'objets compris dans le marqueur (M), un objet reconnaissable le plus éloigné de la position d'observation (P).

3. Appareil d'observation routière (5) selon la revendication 2, dans lequel
le dispositif de détermination de reconnaissance (532), lorsqu'un objet parmi la pluralité d'objets du marqueur (M) situé au-delà de la position de la cible d'imagerie distante (6, 9) n'est pas reconnaissable, détermine que la reconnaissance de la cible d'imagerie distante (6, 9) est incorrecte.

4. Appareil d'observation routière (5) selon l'une quelconque des revendications 1 à 3,
dans lequel, si la zone visible réinitialisée dépasse la position de la cible d'imagerie distante (6, 9), le dispositif de détermination de reconnaissance (532) détermine que la reconnaissance de la cible d'imagerie distante (6, 9) est correcte.

5. Appareil d'observation routière (5) selon l'une quelconque des revendications 1 à 4,
dans lequel, lorsque le temps de mise à jour régulier s'est écoulé depuis que la zone visible a été définie, le dispositif de détermination de reconnaissance (532) déclenche la réinitialisation de la zone visible.

6. Appareil d'observation routière (5) selon la revendication 5,
dans lequel, si la cible d'imagerie distante (6, 9) n'est pas reconnue, le dispositif de détermination de reconnaissance (532) augmente le temps de mise à jour régulier.

7. Appareil d'observation routière (5) selon la revendication 5 ou 6, dans lequel, même si la cible d'imagerie distante (6, 9) est reconnue, le dispositif de détermination de reconnaissance (532) ne déclenche pas la réinitialisation de la zone visible tant qu'un temps de conservation, qui est plus court que le temps de mise à jour régulier, ne s'est pas écoulé depuis que la zone visible a été définie.

8. Procédé d'observation d'une route, le procédé comprenant :
la définition d'une zone visible, qui est une zone dans laquelle une cible d'imagerie (6, 9) est reconnaissable par ledit appareil d'imagerie, sur une base de la question de savoir si un marqueur (M) inclus dans ladite cible d'imagerie est reconnaissable (S1) ;
le déclenchement, si une cible d'imagerie distante (6, 9), qui est la cible d'imagerie (6, 9) située à une position au-delà de la zone visible définie, de la réinitialisation de la zone visible (S7) ; et
la détermination, si la zone visible réinitialisée ne dépasse pas la position de la cible d'imagerie distante (6, 9), que la reconnaissance de la cible d'imagerie distante (6, 9) est incorrecte (S10).
